# EUROPÄISCHE PATENTSCHRIFT

(11) **EP 2 886 807 B1**
(45) Veröffentlichungstag und Bekanntmachung des Hinweises auf die Patenterteilung: **10.10.2018**
(21) Anmeldenummer: 14197292.7
(22) Anmeldetag: 11.12.2014
(51) Int. Cl.: F01D 25/12, F01D 25/14, F01D 25/24

(54) **GEKÜHLTE FLANSCHVERBINDUNG EINES GASTURBINENTRIEBWERKS**
COOLED FLANGED CONNECTION FOR A GAS TURBINE ENGINE
BRIDE DE LIAISON REFROIDIE D'UNE TURBINE À GAZ

(30) Priorität: 18.12.2013 DE 102013226490
(43) Veröffentlichungstag der Anmeldung: 24.06.2015
(73) Patentinhaber: Rolls-Royce Deutschland Ltd & Co KG, 15827 Blankenfelde-Mahlow (DE)
(72) Erfinder: SZARVASY, Ivo, Dr., 14532 Stahnsdorf (DE); LOHMANN, Friedrich, 15723 Eichwalde (DE)
(74) Vertreter: Hoefer & Partner Patentanwälte mbB

(56) Entgegenhaltungen:
- EP-A1- 0 559 420
- US-A- 4 309 145
- US-A- 5 072 785
- US-A- 5 593 277

## Beschreibung

Die Erfindung betrifft eine gekühlte Flanschverbindung eines Gasturbinentriebwerks gemäß den Merkmalen des Oberbegriffs des Anspruchs 1.

Im Einzelnen betrifft die Erfindung somit eine Flanschverbindung, welche als Ringflansch ausgebildet ist. Die Flanschverbindung umfasst einen ersten Flansch eines ersten Bauteils, einen zweiten, mittleren Flansch eines zweiten Bauteils und einen dritten Flansch eines dritten Bauteils. Die einzelnen Flansche sind durch eine Vielzahl von am Umfang verteilten, die Flansche durchgreifenden Bolzen gegeneinander verspannt.

Aus dem Stand der Technik ist es bekannt, dass Flanschverbindungen, insbesondere von Gasturbinentriebwerken, gekühlt werden.

In der US 7,185,499 B2 ist ein Kompressorflansch beschrieben worden, der zur Schraubenventilierung Luft aus dem stromab gelegenen Brennkammerplenum über radiale Bohrungen Luft zapft, über Umfangsnuten verteilt und schließlich über radiale Bohrungen in das Kompressorplenum einleitet. Der Nachteil dieser Lösung liegt in der Fertigung. Die Segmentierung des Flansches und das Bohren der radialen Löcher oder Slots ist zeitaufwendig und kostspielig. Des Weiteren werden die Schrauben nur in einem sehr schmalen Bereich umspült, da die von der Umfangsnut abgehenden Bohrungen Sacklöcher sind und somit eine tote Kavität darstellen und nicht gespült werden.

Der Nachteil dieser Flanschgestaltungen ist die thermale Trägheit. Durch die hohe Wärmekapazität des gesamten Flanschpakets wird eine lange Zeitspanne benötigt, bis der gesamte Flansch durchgewärmt oder abgekühlt ist.

In transienten Zuständen, also während des Beschleunigens oder Verzögerns eines Triebwerks, nimmt der Flansch von außen nach innen die geänderte Temperatur an, so dass die im Inneren gelegenen Bolzen erst sehr spät die geänderte Temperatur annehmen. Dadurch kommt es während transienter Zustände zu Temperaturdifferenzen von ca. 100K. Unter Berücksichtigung der Ausdehnungskoeffizienten werden somit zusätzliche Spannungen in den Bolzen eingebracht, die die Höhe der Vorspannung haben und damit das Leben der Bolzen stark herabsetzen.

Des Weiteren nehmen die (dünnwandigen) Flanschanschlüsse sehr schnell die geänderte Temperatur an, so dass an den Übergangszonen zwischen Flansch und Flanschanschlüssen hohe Biegespannungen entstehen.

Aus der EP 0 559 420 A1 ist eine gekühlte Flanschverbindung eines Gasturbinentriebwerks bekannt, welche einen ersten, einen zweiten und einen dritten Ringflansch aufweist. Diese sind mit einer Vielzahl von axialen Ausnehmungen versehen, durch welche Bolzen durchgeführt sind, welche die Flansche gegeneinander verschrauben. Der erste und der dritte Flansch weisen jeweils an ihren Kontaktbereichen zu dem zweiten Flansch einen Umfangskanal auf. Die Umfangskanäle sind durch vergrößerte Bolzenlöcher miteinander verbunden.

Der Erfindung liegt die Aufgabe zugrunde, eine Flanschverbindung der eingangs genannten Art zu schaffen, welche bei einfachem Aufbau und einfacher, kostengünstiger Herstellbarkeit die Nachteile des Standes der Technik vermeidet und eine gute Kühlung, insbesondere der Bolzen, ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass an zwei Kontaktbereichen zwischen jeweils zwei der Flansche ein sich zumindest um einen Teil des Umfangs erstreckender Umfangskanal vorgesehen ist. Der in Strömungsrichtung stromauf liegende Flansch weist eine Verbindungsausnehmung auf, die mit dem stromauf gelegenen, ersten Umfangskanal in Verbindung steht, um Kühlluft in diesen einzuleiten. Entsprechend weist der in Strömungsrichtung stromab angeordnete Flansch zumindest eine Ausströmausnehmung auf, um Kühlluft aus dem zweiten Flansch auszuleiten.

Um eine Durchströmung der beiden Umfangskanäle mit Kühlluft zu ermöglichen, ist zumindest eine axiale Verbindungsausnehmung vorgesehen, welche den ersten Umfangskanal mit dem zweiten Umfangskanal verbindet.

Die Kühlluft kann somit durch die Einströmausnehmung eintreten, in den ersten Umfangskanal einströmen, von diesem durch die Verbindungsausnehmungen in den zweiten Umfangskanal gelangen und durch die Ausströmausnehmung austreten. Somit wird der gesamte Flansch von Kühlluft durchströmt. Durch eine geeignete Platzierung der einzelnen Ausnehmungen am Umfang wird eine gleichmäßige Durchströmung sichergestellt.

Bei der erfindungsgemäßen Flanschverbindung liegt im Bereich der Einströmausnehmung ein höherer Druck vor, als im Bereich der Ausströmausnehmung. Hierdurch ergibt sich ein Druckgefälle oder Druckgradient, welcher die Durchströmung ermöglicht.

Die Einströmausnehmung und die Ausströmausnehmung sind in Umfangsrichtung zueinander versetzt angeordnet, so dass eine direkte Durchströmung in axialer Richtung im Wesentlichen vermieden wird. Gleiches gilt bevorzugterweise für die Verbindungsausnehmungen.

Um die Kühlung der Bolzen zu verbessern, ist es weiterhin günstig, wenn die Verbindungsausnehmungen mit den Bolzenlöchern kombiniert sind. Hierzu weisen die Bolzenlöcher einen Durchmesser auf, welcher größer ist, als der Außendurchmesser der Bolzen. Somit wird um die Bolzen herum ein Luftkanal gebildet, durch welchen Kühlluft strömen kann, um die Bolzen zu kühlen. Dabei dichten bevorzugterweise die Bolzenköpfe und/oder die Muttern die Bolzenlöcher zur Umgebung hin ab.

Zur Verbesserung der Durchströmung und damit der Kühlung sind die Einströmausnehmung und Ausströmausnehmung jeweils axial angeordnet.

Weiterhin ist es besonders vorteilhaft, wenn die Bolzen mit den Bolzenlöchern die Umfangskanäle direkt durchgreifen. Hierdurch ergibt sich eine größtmögliche Umspülung mit Kühlluft.

Die Erfindung beschreibt somit die Ventilierung der Bolzen. Durch Bohrungen im ersten Flansch wird Luft aus der stromauf gelegenen Kavität in einen ersten Umfangskanal geleitet. Dieser Umfangskanal kann sowohl im ersten Flansch an der stromabgelegenen Seite als auch im zweiten Flansch an der stromaufgelegenen Seite integriert und sowohl segmentiert als auch unsegmentiert sein. Diese Luft gelangt durch die Bolzenlöcher in den stromabgelegenen Umfangskanal, wodurch der Wärmeübergang zu den Bolzen erhöht wird und die Temperatur- und damit die Dehnungsdifferenz zwischen Flansch und Bolzen reduziert wird. Dadurch sinken die in den Bolzen wirkenden Spannungen. Der stromabgelegene zweite Umfangskanal kann wiederum sowohl segmentiert als auch unsegmentiert sein und sowohl am stromaufgelegenen Flansch auf der stromabgelegenen Seite als auch am stromabgelegenen Flansch auf der stromaufgelegenen Seite integriert sein. Durch axiale Bohrungen, die zu den Eintrittsbohrungen entweder koaxial oder in umfangs- oder radialer Richtung versetzt sein können, tritt die Luft aus dem Flanschpaket aus. Die Anzahl der zwischen dem stromauf- und stromabgelegenen Flansch gelegenen Flanschen beträgt 1 oder höher, wenn die Bolzen axial gespült werden, wird zumindest ein mittlerer Flansch gebraucht. Falls der Ringspalt bereits ausreicht, wird kein mittlerer Flansch benötigt. Erfindungsgemäß ist auch eine Flanschverbindung denkbar, die die Bolzenköpfe und Bolzenmuttern als Ein- und Ausströmausnehmung verwendet (durch Löcher im Bolzenkopf oder in der Bolzenmutter oder durch Schlitze unter den Bolzenköpfen).

Durch die Ventilierung der Bolzen und des Flansches wird eine Erhöhung der Lebensdauer der Bolzen, und auch der Flanschanschlüsse bewirkt, da die relativen Dehnungen und die damit einhergehenden Spannungen reduziert werden.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine schematische Darstellung eines Ausführungsbeispiels zur Verwendung der erfindungsgemäßen Flanschverbindung,
- Fig. 3: eine vergrößerte Detailansicht gemäß Fig. 2 im Schnitt,
- Fig. 4, 5: vergrößerte Detailansichten, analog Fig. 3, in perspektivischer Darstellung,
- Fig. 6: eine perspektivische Darstellung zur Erläuterung der Strömungswege, und
- Fig. 7: eine schematische Darstellung, analog Fig. 2, eines weiteren Ausführungsbeispiels der Erfindung.

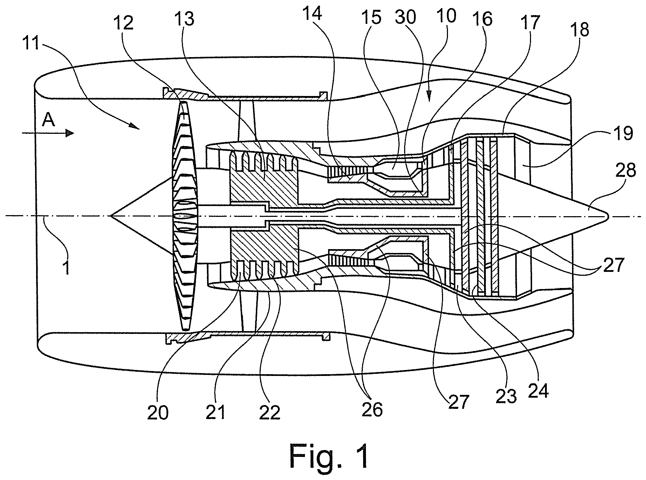

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

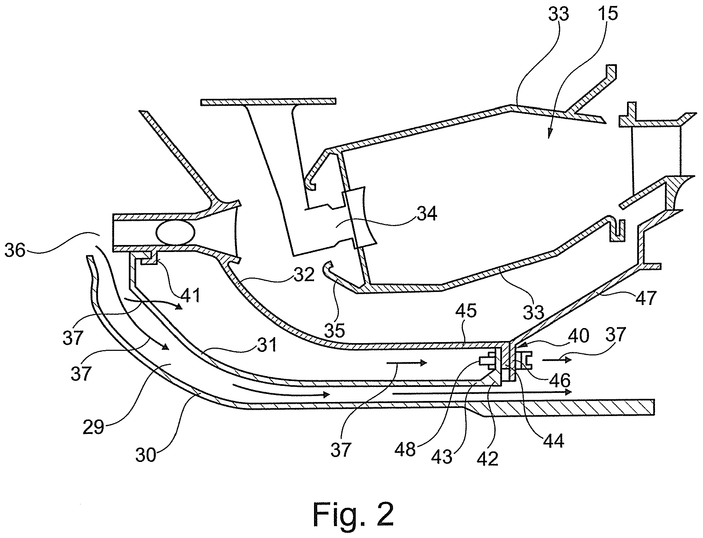

Die Fig. 2 zeigt eine vergrößerte Detailansicht. Dabei ist schematisch die Brennkammer 15 mit einer äußeren und einer inneren Brennkammerwand 33 dargestellt. Das Bezugszeichen 34 zeigt einen Brenner, welcher im Bereich eines Brennkammerkopfes 35 angeordnet ist. Die Brennkammer 15 ist in einem Brennkammergehäuse 32 aufgenommen und gelagert, welches in Fig. 2 nur schematisch dargestellt ist.

Bezogen auf die Triebwerksachse 1 ist radial innerhalb des Brennkammergehäuses 32 eine Hochdruckwelle 30 angeordnet. Auch diese ist in Fig. 2 nur schematisch dargestellt. Zwischen dem Brennkammergehäuse 32 und der Hochdruckwelle 30 wird somit ein Zwischenraum gebildet, welcher als Ringkanal 29 bezeichnet ist.

Wie sich aus der Darstellung der Fig. 2 ergibt, strömt Kühlluft 37 durch einen Kühllufteintritt 36 in den Zwischenraum zwischen dem Brennkammergehäuse 32 und der Hochdruckwelle 30 ein.

Dabei ist ein Strömungsleitelement 31 vorgesehen, welches als Rotationskörper ausgebildet ist und eine im Wesentlichen rohrförmige Ausgestaltung aufweist. Das Strömungsleitelement 31 ist so ausgebildet und angeordnet, dass sich, ausgehend vom Kühllufteintritt 36 ein im Wesentlichen konstanter Querschnitt des Ringkanals 29 ergibt.

Das Strömungsleitelement 31 ist mittels einer Schraubbefestigung 40 mit dem Brennkammergehäuse 32 verbunden. Im Bereich des Kühllufteintritts 36 ist das Strömungsleitelement 31 mittels einer Lagerung 41 befestigt, die beispielsweise als formschlüssige Verbindung ausgebildet sein kann.

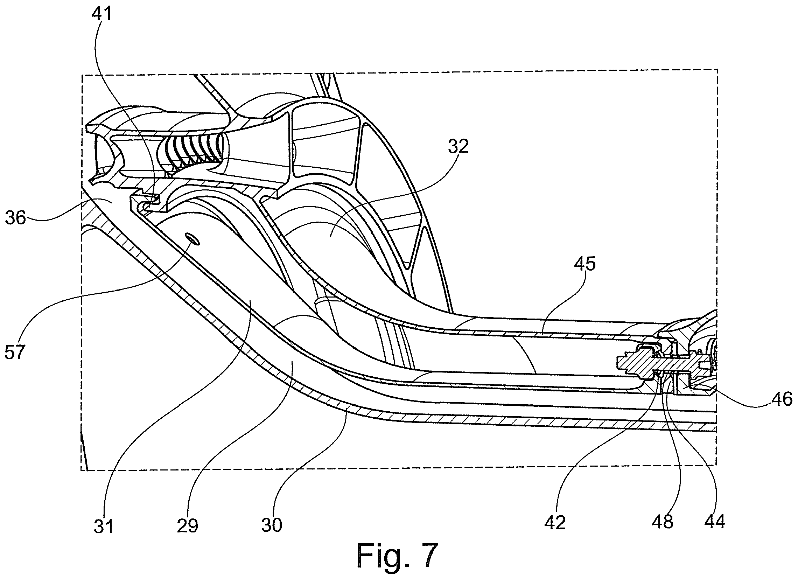

Wie die Fig. 2 zeigt, wird ein Teil der Kühlluft 37, welcher durch Ausnehmungen 57 (siehe Fig. 7) durch das Strömungsleitelement 31 durchtritt, der Flanschverbindung zugeführt.

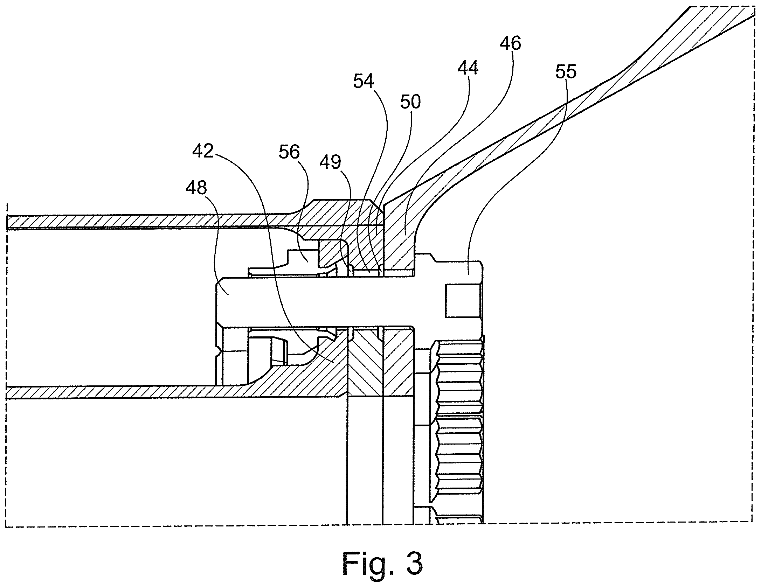

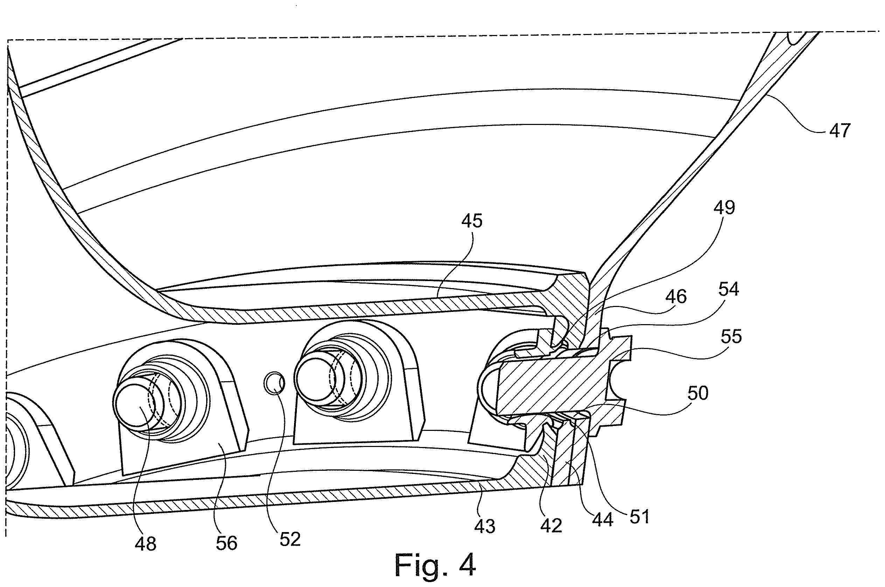

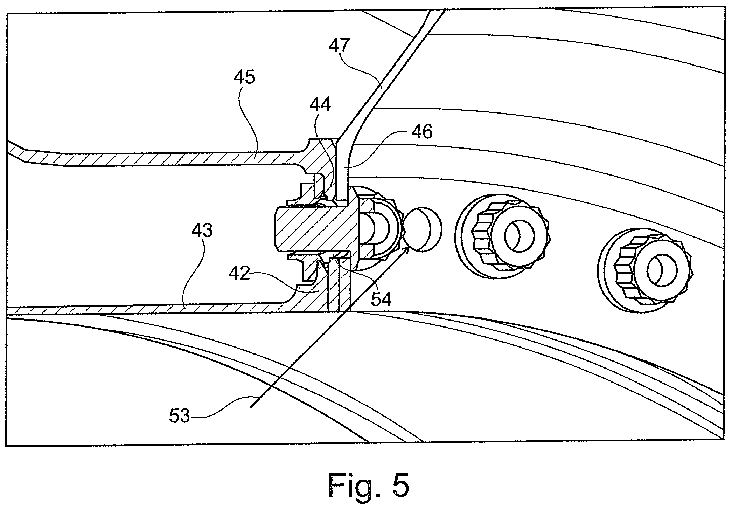

Die Fig. 3 bis 5 zeigen jeweils die erfindungsgemäße Ausgestaltung der Flanschverbindung. Dabei ist insbesondere die Anordnung der Flansche im Einzelnen gezeigt. Ein erster Flansch 42 eines ersten Bauteils 43 ist stromauf angeordnet. Diesem folgt ein zweiter Flansch 44, welcher als mittlerer Flansch angeordnet ist und einem zweiten Bauteil 45 zugeordnet ist. Stromab ist ein dritter Flansch 46 eines dritten Bauteils 47 angeordnet. Zur Sicherung der Flansche werden diese von einer Vielzahl am Umfang angeordneter Bolzen 48 durchgriffen, welche als Gewindebolzen ausgebildet sind und einen Bolzenkopf 55 sowie eine Mutter 56 umfassen. Dieser Aufbau entspricht dem Stand der Technik.

Im Kontaktbereich zwischen dem ersten Flansch 42 und dem zweiten Flansch 44 ist ein erster Umfangskanal 49 ausgebildet. Dieser kann entweder in dem ersten Flansch 42 oder in dem zweiten Flansch 44 ausgebildet sein. Es ist auch möglich, in beiden Flanschen einen Teil des ersten Umfangskanals auszubilden. In gleicher Weise ist zwischen dem zweiten Flansch und dem dritten Flansch ein zweiter Umfangskanal 50 vorgesehen. Die beiden Umfangskanäle 49 und 50 können segmentiert ausgebildet sein, sie können sich jedoch auch ohne Unterbrechung um den gesamten Umfang des jeweiligen Flansches erstrecken.

Zwischen den Umfangskanälen 49 und 50 ist zumindest eine axiale Verbindungsausnehmung 51 vorgesehen, welche in bevorzugter Weise in Form eines Bolzenlochs 54 ausgebildet ist. Durch die axiale Verbindungsausnehmung 51 bzw. das mit einem größeren Durchmesser ausgebildete Bolzenloch 54 kann Kühlluft von dem ersten Umfangskanal 49 in den zweiten Umfangskanal 50 strömen. Der erste Flansch 42 weist Einströmausnehmungen 52 auf, während der dritte Flansch 46 mit Ausströmausnehmungen 53 versehen ist.

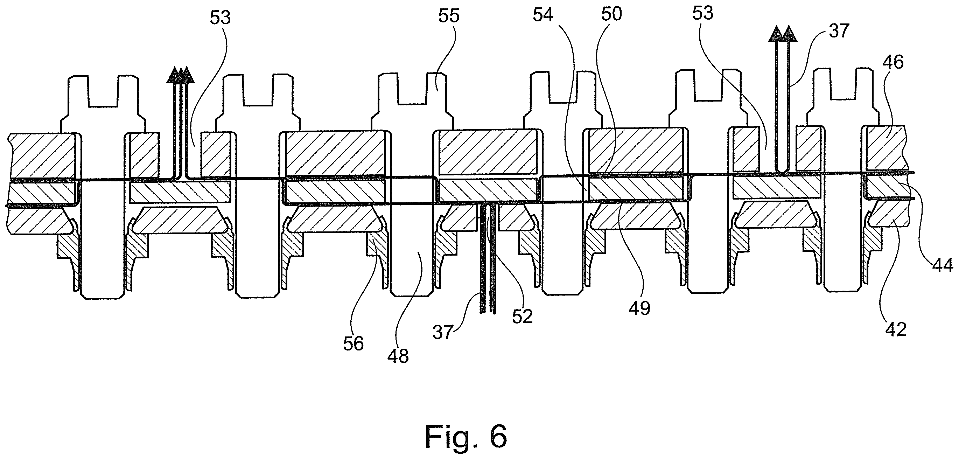

Die Fig. 6 zeigt die Durchströmung der Umfangskanäle 49 und 50. Daraus ist ersichtlich, dass die durch die Einströmausnehmung 52 eintretende Luft sich beliebig in dem ersten Umfangskanal 49 verteilen kann, um durch beliebige Bolzenlöcher 54 in den zweiten Umfangskanal 50 zu gelangen und aus diesem durch die Ausströmausnehmungen 53 auszutreten. Hierdurch wird eine gleichmäßige Kühlung sowohl des Flansches als auch der Bolzen sichergestellt. Sowohl die Flansche als auch die Bolzen können somit thermisch beeinflusst werden, wobei hierzu nur eine relativ geringe Kühlluftmenge erforderlich ist. Die Kühlung wird über den sich bildenden Druckgradienten ermöglicht.

In Fig. 7 ist in schematischer Weise, analog Fig. 2, eine weitere Ausgestaltungsvariante der Erfindung dargestellt. Gleiche Teile sind mit gleichen Bezugsziffern versehen. Aus der Darstellung der Fig. 7 ergibt sich insbesondere die Lage der Ausnehmungen 57 zum Kühlluftdurchtritt. Diese Ausnehmungen sind oben stehend in Verbindung mit Fig. 2 erläutert. Somit tritt ein Teil der durch den Ringkanal 29 strömenden Kühlluft durch die Ausnehmungen 57 durch das Strömungsleitelement 31 durch, um zur Kühlung der Flanschverbindung zu dienen. Zwischen der Hochdruckwelle 30 (Kompressor-Trommel) und dem Strömungsleitelement 31 wird der Druck der Kühlluft mit abnehmendem Radius geringer. Dieser geringere Druck liegt auch hinter der Flanschverbindung an. Zwischen dem Strömungsleitelement 31 und dem Brennkammergehäuse 32 bleibt der Druck konstant, sodass durch die radiale Position der Ausnehmungen 57 ein relativ hoher Druck im Bereich der radial äußeren Seite des Strömungsleitelements 31 aufgebaut wird, der ausreichend ist, um die Kühlung und Durchströmung der Flanschverbindung sicherzustellen.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Ringkanal
- 30: Hochdruckwelle
- 31: Strömungsleitelement
- 32: Brennkammergehäuse
- 33: Brennkammerwand
- 34: Brenner
- 35: Brennkammerkopf
- 36: Kühllufteintritt
- 37: Kühlluft
- 38: Rückström- und Verwirbelungsbereich
- 39: Rezirkulationsströmung
- 40: Schraubbefestigung
- 41: Lagerung
- 42: erster Flansch
- 43: erstes Bauteil
- 44: zweiter Flansch
- 45: zweites Bauteil
- 46: dritter Flansch
- 47: drittes Bauteil
- 48: Bolzen
- 49: erster Umfangskanal
- 50: zweiter Umfangskanal
- 51: axiale Verbindungsausnehmung
- 52: Einströmausnehmung
- 53: Ausströmausnehmung
- 54: Bolzenloch
- 55: Bolzenkopf
- 56: Mutter
- 57: Ausnehmung

## Patentansprüche

1. Gekühlte Flanschverbindung eines Gasturbinentriebwerks, wobei die Flanschverbindung als Ringflansch ausgebildet ist und einen ersten Flansch (42) eines ersten Bauteils (43), zumindest einen zweiten, mittleren Flansch (44) eines zweiten Bauteils (45) und einen dritten Flansch (46) eines dritten Bauteils (47) umfasst, welche mittels einer Vielzahl von am Umfang verteilten, die drei Flansche (42, 44, 46) durchgreifenden Bolzen (48) gegeneinander verspannt sind, wobei
- an dem Kontaktbereich zwischen dem ersten (42) und dem zweiten (44) Flansch ein erster, sich zumindest über einen Teil des Umfangs erstreckender Umfangskanal (49) und an dem Kontaktbereich zwischen dem zweiten (44) und dem dritten (46) Flansch ein zweiter, sich zumindest über einen Teil des Umfangs erstreckender Umfangskanal (50) angeordnet sind,
- wobei der erste Umfangskanal (49) und der zweite Umfangskanal (50) durch axiale Verbindungsausnehmungen (51) miteinander in Verbindung stehen,
- wobei der erste Flansch (42) mit zumindest einer mit dem ersten Umfangskanal (49) verbundenen Einströmausnehmung (52) versehen ist, und
- wobei der dritte Flansch (46) mit zumindest einer mit dem zweiten Umfangskanal (50) verbundenen Ausströmausnehmung (53) versehen ist,
- wobei die Einströmausnehmung (52) und die Ausströmausnehmung (53), die mittels des ersten und zweiten Umfangskanals in Verbindung stehen, in Umfangsrichtung zueinander versetzt sind, **dadurch gekennzeichnet, dass** die Einströmausnehmung (52) und die Ausströmausnehmung (53) jeweils in Axialrichtung angeordnet sind, sodass eine Strömung in axialer Richtung ermöglicht wird,
- wobei die Durchmesser von in den Flanschen (42, 44, 46) zur Durchführung der Bolzen (48) ausgebildeten Bolzenlöchern (54) zur Ausbildung einer axialen Verbindungsausnehmung (51) größer ausgebildet sind, als die Außendurchmesser der Bolzen (48), sodass ein Luftkanal um die Bolzen herum gebildet wird, durch welchen Kühlluft strömen kann.

2. Flanschverbindung nach Anspruch 1, **dadurch gekennzeichnet, dass** im montierten Zustand der Flanschverbindung und im Betrieb der Gasturbine, im Bereich der Einströmausnehmung (52) ein höherer Druck vorliegt, als im Bereich der Ausströmausnehmung (53).

3. Flanschverbindung nach Anspruch 1 oder 2, **dadurch gekennzeichnet, dass** Bolzenköpfe (55) und/oder Muttern (56) die Bolzenlöcher (54) zur Umgebung abdichten.

4. Flanschverbindung nach einem der Ansprüche 1 bis 3, **dadurch gekennzeichnet, dass** die Bolzen (48) mit den Bolzenlöchern (54) die Umfangskanäle (49, 50) durchgreifen.

5. Flanschverbindung nach einem der Ansprüche 1 bis 4, **dadurch gekennzeichnet, dass** die Flanschverbindung von Kühlluft durchströmbar ist.

## Claims

1. Cooled flange connection of a gas-turbine engine, wherein the flange connection is designed as an annular flange and includes a first flange (42) of a first component (43), at least a second, central flange (44) of a second component (45) and a third flange (46) of a third component (47), which are braced against one another by a plurality of bolts (48) spread over the circumference and passing through the three flanges (42, 44, 46),
- wherein at the contact area between the first (42) and the second (44) flange a first circumferential duct (49) is provided that extends over at least part of the circumference, and at the contact area between the second (44) and the third (46) flange a second circumferential duct (50) is provided that extends over at least part of the circumference,
- wherein the first circumferential duct (49) and the second circumferential duct (50) are connected to one another by axial connecting recesses (51),
- wherein the first flange (42) is provided with at least one inflow recess (52) connected to the first circumferential duct (49), and
- wherein the third flange (46) is provided with at least one outflow recess (53) connected to the second circumferential duct (50),
- wherein the inflow recess (52) and the outflow recess (53), which are connected to one another via the first and the second circumferential duct, are arranged offset relative to one another in the circumferential direction,
**characterized in that**
the inflow recess (52) and the outflow recess (53) are each arranged in the axial direction, enabling a flow in the axial direction, wherein
- for providing an axial connecting recess (51), the diameters of the bolt holes (54) designed in the flanges (42, 44, 46) for passing through the bolts (48) are greater than the outer diameters of the bolts (48), so that an air duct is formed around the bolts, through which cooling air can flow.

2. Flange connection in accordance with Claim 1, **characterized in that** in the installed condition of the flange connection and when the gas turbine is in operation, the pressure is higher in the area of the inflow recess (52) than in the area of the outflow recess (53).

3. Flange connection in accordance with Claim 1 or 2 **characterized in that** bolt heads (55) and/ or nuts (56) seal off the bolt holes (54) from the environment.

4. Flange connection in accordance with one of the Claims 1 to 3, **characterized in that** the bolts (48) with the bolt holes (54) pass through the circumferential ducts (49, 50).

5. Flange connection in accordance with one of the Claims 1 to 4, **characterized in that** cooling air can flow through the flange connection.

## Revendications

1. Raccord à brides refroidi d'un moteur de turbine à gaz, sachant que le raccord à brides est conçu sous forme de bride annulaire et comprend une première bride (42) d'un premier composant (43), au moins une deuxième bride médiane (44) d'un deuxième composant (45) et une troisième bride (46) d'un troisième composant (47), lesquelles brides sont serrées les unes aux autres au moyen d'une multitude de boulons (48) traversant les trois brides (42, 44, 46) et répartis sur la circonférence,
- sachant que sont disposés, sur la zone de contact entre la première bride (42) et la deuxième (44), un premier canal circonférentiel (49) s'étendant au moins sur une partie de la circonférence et sur la zone de contact entre la deuxième bride (44) et la troisième (46), un second canal circonférentiel (50) s'étendant au moins sur une partie de la circonférence,
- sachant que le premier canal circonférentiel (49) et le second canal circonférentiel (50) sont reliés l'un à l'autre au moyen d'évidements de liaison axiaux (51),
- sachant que la première bride (42) est pourvue d'au moins un évidement d'admission (52) relié au premier canal circonférentiel (49), et
- sachant que la troisième bride (46) est pourvue d'au moins un évidement de sortie (53) relié au second canal circonférentiel (50),
- sachant que l'évidement d'admission (52) et l'évidement de sortie (53) qui sont reliés au moyen du premier et du second canal circonférentiel sont décalés l'un de l'autre dans le sens circonférentiel,
**caractérisé en ce que**
l'évidement d'admission (52) et l'évidement de sortie (53) sont disposés respectivement dans le sens axial de sorte à permettre un écoulement dans le sens axial,
- sachant qu'afin de former un évidement de liaison axial (51), les diamètres des trous de boulon (54) constitués dans les brides (42, 44, 46) pour introduire les boulons (48) sont supérieurs aux diamètres extérieurs des boulons (48) de sorte qu'un canal d'air est constitué autour des boulons à travers lequel de l'air de refroidissement peut s'écouler.

2. Raccord à brides selon la revendication n° 1, **caractérisé en ce qu'**à l'état monté du raccord à brides et pendant le fonctionnement de la turbine à gaz, il existe, dans la zone de l'évidement d'admission (52), une pression supérieure à celle régnant dans la zone de l'évidement de sortie (53).

3. Raccord à brides selon la revendication n° 1 ou n° 2, **caractérisé en ce que** des têtes de boulon (55) et/ ou des écrous (56) isolent les trous de boulon (54) de l'environnement.

4. Raccord à brides selon une des revendications n° 1 à n° 3, **caractérisé en ce que** les boulons (48) avec les trous de boulon (54) traversent les canaux circonférentiels (49, 50).

5. Raccord à brides selon une des revendications n° 1 à n° 4, **caractérisé en ce que** le raccord à brides peut être traversé par de l'air de refroidissement.
